# EUROPÄISCHE PATENTSCHRIFT

(11) **EP 0 540 808 B1**
(45) Veröffentlichungstag und Bekanntmachung des Hinweises auf die Patenterteilung: **16.08.2000**
(21) Anmeldenummer: 92105958.0
(22) Anmeldetag: 07.04.1992
(51) Int. Cl.: H04B 7/26

(54) **Synchronisationsverfahren für ein GSM arbeitendes Mobilfunktelefon mit Anfang, Normal und Aufsynchronisation**
Synchronisation method for mobile telephone of GSM standard with beginning, normal and end synchronisation
Méthode de synchronisation pour un téléphone mobile de norme GSM avec synchronisation de début, normale et de fin

(30) Priorität: 02.11.1991 DE 4136147
(43) Veröffentlichungstag der Anmeldung: 12.05.1993
(73) Patentinhaber: ROBERT BOSCH GMBH, 70442 Stuttgart (DE)
(72) Erfinder: Bilitza, Herbert, Dipl.-Ing., W-1000 Berlin 37 (DE); Gärtner, Siegfried Dipl.-Ing., W-1000 Berlin 65 (DE); Neuner, Hermann, Dipl.-Ing., W-1000 Berlin 42 (DE)
(74) Vertreter: Wiechmann, Manfred, Dipl.-Ing.

(56) Entgegenhaltungen:
- EP-A- 0 318 684
- EP-A- 0 444 485
- WO-A-88/05981
- M R L HODGES: "The GSM radio interface", BR TELECOM TECHNOL J, , JAN 1990, Band 8, Nr. 1, Seiten 31 - 43

## Beschreibung

Die Erfindung geht von einem Synchronisationsverfahren nach dem Oberbegriff des Anspruchs 1 aus.

Bei einem bekannten digitalen Mobilfunktelefonnetz (GSM Recommendation) ist für die Synchronisation eines Mobilfunktelefons ein verhältnismäßig großer Aufwand erforderlich, um die hohen Anforderungen bei der Übertragung der digitalen Informationen zu erfüllen.

Verschiedene Synchronisationsverfahren werden auch in "The GSM radio interface" von M. R. L. Hodges, British Telecom Technol. J., Vol. 8, Nummer 1, Jan 1990 beschrieben.

Der Erfindung liegt die Aufgabe zugrunde, ein Synchronisationsverfahren anzugeben, das bei möglichst geringem technischen Aufwand alle gestellten Forderungen erfüllt.

Diese Aufgabe wird durch ein Synchronisationsverfahren nach dem Anspruch 1 gelöst. Damit ist der Vorteil verbunden, daß die Synchronisation mit hoher Präzision und einem verhältnismäßig geringen Aufwand verwirklicht werden kann. Vorteilhafte Ausgestaltungen und Weiterbildungen der Erfindung ergeben sich aus den Unteransprüchen. Besonders vorteilhaft ist das Verfahren, wenn die Synchronisierung auf der Auswertung der kontinuierlichen Phasenwinkel beruht, die jeweils aus den einzelnen I-, Q-Wertepaaren berechnet werden. Dadurch wird der synchrone Zustand sehr schnell erreicht.

Ein Ausführungsbeispiel der Erfindung ist in der Zeichnung an Hand mehrerer Figuren dargestellt und wird im folgenden näher beschrieben. Es zeigen
- Fig. 1: ein Schema der Datenstruktur eines TDMA-Rahmens,
- Fig. 2: ein Blockschaltbild einer Empfangs- und Equalizereinheit einer Mobilstation,
- Fig. 3: zwei Phasenverläufe in Abhängigkeit von der Bitfolge und dem Abtasttakt und
- Fig. 4: den theoretisch ermittelten (A) und einen gemessenen (B) Phasengang der Trainingssequenz aus dem Synchronisations-Burst.

Bei dem digitalen Mobilfunktelefonnetz GSM (Groupe Speciale Mobile), das die Grundlage für das in Deutschland verwendete D-Netz bildet, erfolgt die Übertragung auf dem Funkweg rein digital.

Der für das D-Netz reservierte Empfangsfrequenzbereich erstreckt sich von 935 bis 960 MHz und ist in 124 Empfangskanäle mit je 200 kHz Bandbreite aufgeteilt, wobei je Frequenzband acht Teilnehmerkanäle im Zeitmultiplex-Raster angeordnet und die einzelnen Zeitschlitze rahmenweise organisiert sind.

Für die erforderliche Synchronisation der Mobilfunktelefone werden drei Arten von Synchronisationen unterschieden.
(1) Anfangssynchronisation,
(2) Normalbetriebssynchronisation,
(3) Aufsynchronisation während des Normalbetriebs.

Das Synchronisationsverfahren basiert auf der Auswertung der fortlaufenden Phasenwinkel, die jeweils aus einer I-(Inphase)- und einer Q-(Quadratur)-Komponente berechnet werden. Das im D-Netz angewandte Modulationsverfahren ist das GMSK-(Gaussian Minimum Shift Keying)-Verfahren, bei dem ein lineares Filter mit gaußförmiger Impulsantwort stetige Übergänge zwischen den Modulationsfrequenzen und damit eine Einsparung von Übertragungsbandbreite bewirkt.

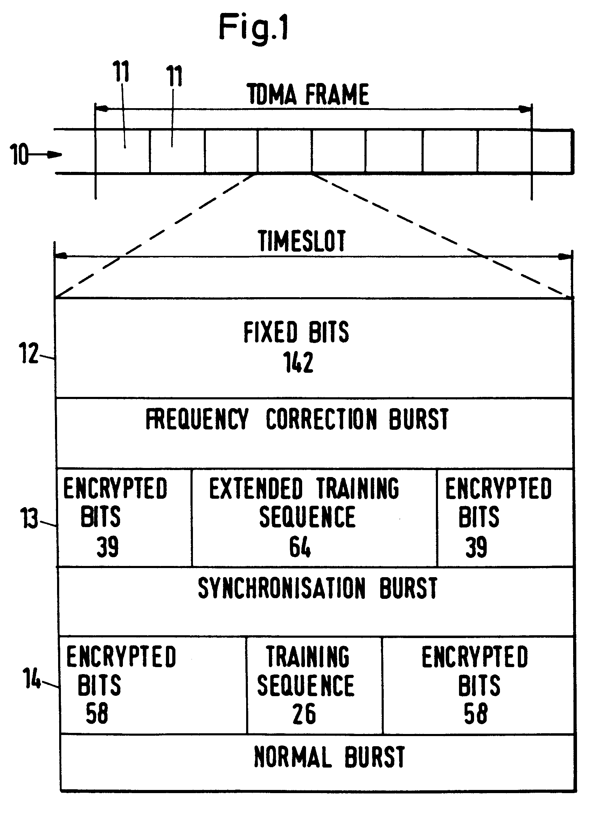

Nach Fig. 1 umfaßt ein TDMA-(Time Division Multiplex Access)-Rahmen 10 acht Zeitschlitze 11; vgl. GSM-Recommendation GSM 5.02.

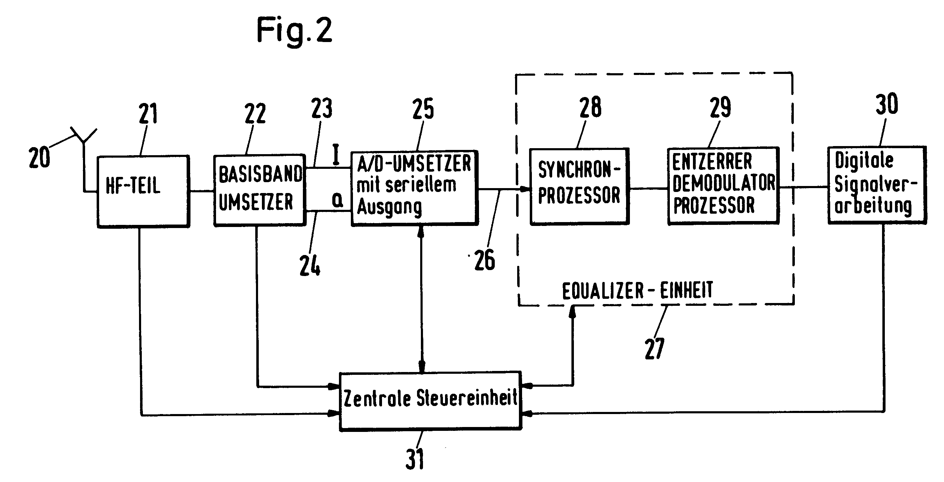

Bevor auf den Synchronisationsablauf näher eingegangen wird, sei an Hand des Blockschaltbildes in Fig. 2 der prinzipielle Aufbau des Empfangszweiges eines Mobilfunktelefons erläutert.

In dem Blockschaltbild bezeichnet 20 eine Funkantenne, die mit dem Eingang eines Hochfrequenzempfangsteils 21 verbunden ist. An den Hochfrequenzempfangsteil schließt sich ein Basisbandumsetzer 22 an, der zwei Ausgänge 23, 24 für die I- bzw Q-Signalspannung aufweist. Beide Ausgänge 23, 24 sind mit entsprechenden Eingängen eines Analog/Digital-Umsetzers 25 verbunden, der einen seriellen Ausgang 26 aufweist. Dieser Ausgang ist mit einem Eingang einer Equalizer-Einheit 27 verbunden, die aus einem Synchron-Prozessor 28 und einem Entzerrer- und Demodulator-Prozessor 29 besteht. An die Equalizer-Einheit 27 schließt sich eine digitale Signalverarbeitungseinheit 30 an. Eine zentrale Steuereinheit 31 steht mit den Stufen 21, 22, 25, 27 und 30 in wechselseitiger Verbindung.

Die Wirkungsweise des in Fig. 2 dargestellten Mobilfunktelefons ist folgende. Nach einer in dem Hochfrequenzempfangsteil 21 vorgenommenen mehrstufigen Hochfrequenzumsetzung des Empfangssignals und einer Transformation in das Basisband mittels des Basisband-Umsetzers 22 werden die I- und Q-Komponente mit einer Frequenz von 270,833 kHz abgetastet und mit 8 Bit in dem Analog/Digital-Umsetzer 25 quantisiert. Alle sich anschließenden Synchronisationsroutinen basieren auf der Verarbeitung der aus der I- und Q-Komponente berechneten Phasenwinkel.

Welcher Synchronisationsschritt jeweils aktiviert werden soll, wird von der zentralen Steuereinheit 31 dem Synchron-Prozessor 28 vorgegeben. Die Steuereinheit ruft die Resultate vom Synchron-Prozessor ab, interpretiert sie und leitet die Stellgrößen an die entsprechenden Komponenten, wie zum Beispiel die Frequenzaufbereitung, weiter.

Die Anfangssynchronisation (1), die der grundsätzlichen Verbindungsaufnahme zwischen einem Mobilfunktelefon und einer Feststation dient, umfaßt vier Schritte:
(1.1) Frequenz-Grobsynchronisation,
(1.2) Rahmen-Grobsynchronisation,
(1.3) Frequenz-Feinsynchronisation,
(1.4) Rahmen-Feinsynchronisation.

### Frequenz-Grobbestimmung und Frequenz-Grobsynchronisation (1.1)

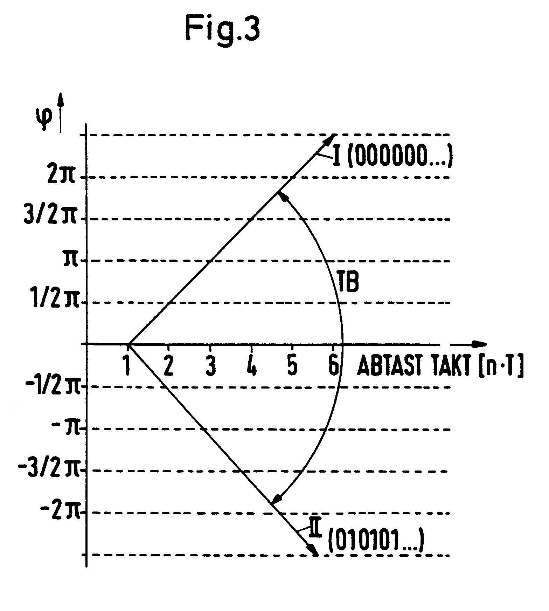

Die Frequenz-Grobbestimmung arbeitet burstunabhängig und kann damit nach dem Auffinden einer Trägerfrequenz durch das Hochfrequenzempfangsteil 21 zu einer ersten Frequenzabschätzung herangezogen werden. Das Ergebnis gibt Auskunft darüber, ob die Frequenz des ermittelten Trägers innerhalb oder außerhalb eines Toleranzbereiches TB, vgl. Fig. 3, liegt. Der maximale Toleranzbereich wird durch den absoluten Phasenverlauf, resultierend aus einer permanenten binären Folge I des logischen Wertes 0 einerseits und aus einer alternierenden binären Folge II aus den logischen Werten 0 und 1 bezüglich einer festen Meßzeit vorgegeben. Der Toleranzbereich ist variierbar, wodurch die Genauigkeit der Frequenzabschätzung bei einer Einschränkung des Bereiches für einen beliebigen Datenstrom zunimmt; vgl. Fig. 3. Bei ausreichender Genauigkeit der Trägerfrequenzen kann auf die burstunabhängige Frequenz-Grobbestimmung verzichtet werden; für die Anfangssynchronisation genügen dann die unter 1.2, 1.3 und 1.4 genannten Synchronisationsschritte.

### Rahmen-Grobbestimmung und Rahmen-Synchronisation (1.2)

Im nächsten Synchronisationsschritt, der Rahmen-Grobbestimmung (1.2), ist es notwendig, den Rahmenbeginn näherungsweise zu detektieren. Hierfür wird der Frequency-Correction-Burst 12 (Fig. 1) verwendet. Seine Charakteristik - 142 fixed Bits - bedeutet für den Phasenverlauf unter Berücksichtigung und Korrektur der Phasensprünge (Phasenrotation) um N · 2π einen kontinuierlichen Phasenanstieg von jeweils 90° je Abtastwertepaar I, Q bei Nennfrequenz. Ohne Berücksichtigung der Phasenrotation liegen die berechneten Phasenwinkel im Bereich von 0 bis 2π mit einer Phasendifferenz von π/2 zwischen zwei benachbarten Phasenwerten. Dadurch ist ein einfaches Kriterium für den Suchalgorithmus zur Erkennung des Beginns des Frequency-Correction-Bursts 12 gegeben.

### Frequenz-Feinbestimmung und Frequenz-Feinsynchronisation (1.3)

Nach erfolgter Bestimmung des Rahmenbeginns ist die Oszillatorfrequenz des Mobilfunktelefons mit hoher Genauigkeit, auf 0,1 ppm, mit der Oszillatorfrequenz der Basisstation in Übereinstimmung zu bringen (GSM 5.10). Dazu wird der Frequency-Correction-Burst 12 verwendet, der für die Dauer eines Zeitschlitzes einem reinen Sinussignal entspricht und dessen kontinuierlicher Phasenverlauf von Abtastwertepaar zu Abtastwertepaar sich jeweils um π/2 bei Nennfrequenz erhöht.

Der Algorithmus zur Frequenzbestimmung ermittelt den aktuellen Phasenwert aus dem I-, Q-Abtastwertepaar und bildet die Differenz mit dem dazu parallel berechneten Referenzphasenwert. Die Minimierung der Phasendifferenzwerte durch eine lineare Regression liefert ein Maß proportional dem Frequenzversatz.

### Rahmen-Feinbestimmung und Rahmen-Synchronisation (1.4)

Die Rahmen-Feinbestimmung bzw. die bitgenaue Rahmen-Synchronisation erfolgt über die Erkennung und Auswertung der Trainingssequenz im Synchronisations-Burst 13 (Fig. 1). Durch ein Musterkorrelationsverfahren ist eine bitgenaue Rahmenbestimmung möglich. Der Fangbereich für die Rahmenfindung liegt im Bereich von ca. ± 40 Takten. Die Meßgröße entspricht direkt der von der zentralen Steuereinheit 31 benötigten Stellgröße zur Bitsynchronisation.

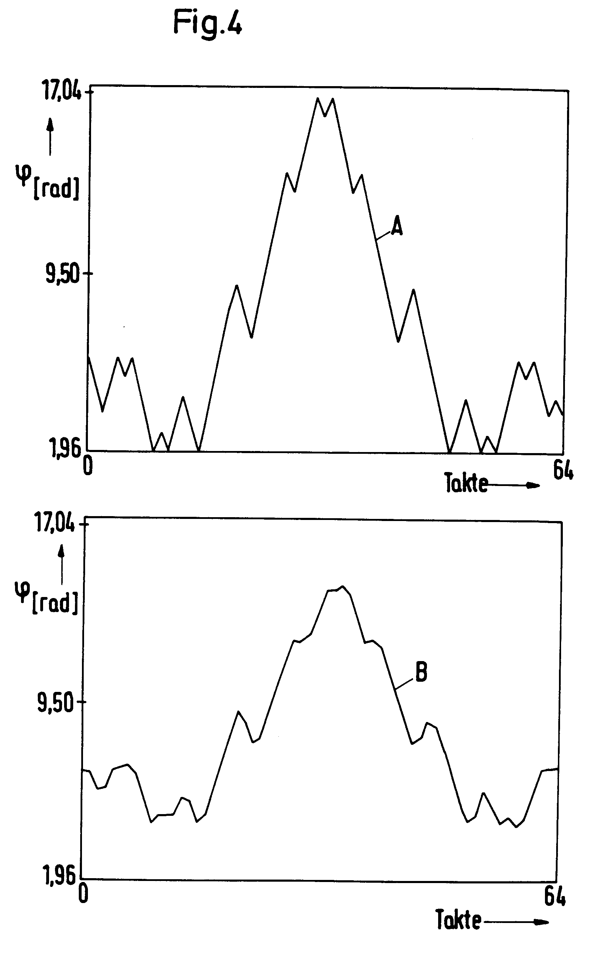

Fig. 4 zeigt den Phasenverlauf der Trainingssequenz innerhalb des Synchronisations-Burstes 13, und zwar
A theoretisch berechnet und
B gemessen
   (am Ausgang des Analog-Digital-Umsetzers 25 gemessene I-, Q-Abtastwerte und daraus berechneter Phasenverlauf).

### Normalbetrieb-Synchronisation (2)

Die Normalbetrieb-Synchronisation erfolgt in zwei Schritten:
2.1 Rahmensynchronisation mit Feinsynchronisation
2.2 Datensignalvorverarbeitung.

Durch eine ständige Überwachung und Aufrechterhaltung des Rahmen- und Frequenzsynchronismus über die Auswertung der Trainingssequenz innerhalb des Normal-Bursts 14 (Fig. 1) wird eine fehlerfreie Dekodierung gewährleistet. Dabei wird zunächst der Rahmenversatz bestimmt. Der ermittelte Wert (Taktversatz) ist ein notwendiger Parameter, um bitgenau die Mustersequenz innerhalb des Datensatzes zu markieren. Dies ist für die anschließende korrekte Korrelationsrechnung zur Bestimmung der aktuellen Frequenzablage Voraussetzung.

### Datenvorverarbeitung (2.2)

Ein aus den aktuellen Frequenzmessungen von der zentralen Steuereinheit 31 ermittelter Frequenz-Korrekturwert wird dem Synchron-Prozessor 28 zugeführt. Damit werden die Daten vorverarbeitet, wodurch sich die Dekodiersicherheit verbessert, da dem Entzerrer die aktuellen Daten bereits frequenzkorrigiert zugeführt werden. Durch die Datensignal-Vorverarbeitung kann die Einschränkung der fehlerfreien Dekodierung bei Frequenzablagen über 200 Hz, die auf den Doppler-Effekt und den Oszillator zurückzuführen wäre, vollständig eliminiert werden.

### Aufsynchronisation (3)

Die Aufsynchronisation, darunter wird eine Synchronisation eines Mobilfunktelefons auf umgebende Nachbarzellen während des Normalbetriebes verstanden, geschieht ebenfalls in zwei Schritten:
3.1 Rahmen-Grobsynchronisation
3.2 Rahmen-Feinsynchronisation mit Frequenz-Feinsynchronisation.

Bei der Aufsynchronisation werden Sonderfälle der Anfangs-Synchronisation abgearbeitet. Dabei wird grundsätzlich sichergestellt, daß beim Verlassen einer Funkzelle die Basisstation der aktuellen Zelle das Bestehenbleiben der Verbindung gewährleistet.

Damit bei einem Wechsel eines Mobilfunktelefons von einer Funkzelle zu einer benachbarten Funkzelle die Synchronisation nicht außer Tritt gerät, werden im Normalbetrieb als Hintergrundprozeß - Aufsynchronisation (Prozeß mit einer geringeren Priorität) - die für eine Zellüberschreitung notwendigen Synchronisationsparameter (Rahmen- und Frequenzversatz) für die umliegenden Nachbarzellen ermittelt. Damit wird durch die Steuereinheit 31 sichergestellt, daß eine Verbindung zellüberschreitend aufrechterhalten bleibt.

Im einzelnen läuft bei der Aufsynchronisation als Hintergrundprozeß während des Normalbetriebes eine Rahmen-Grobsynchronisation (Frequency-Burst-Beginn) und eine Rahmen-Feinsynchronisation mit einer Frequenz-Feinsynchronisation ab, wobei für die Rahmen- und Frequenzsynchronisation der Synchronisations-Burst 13 verwendet wird.

Die hierfür relevanten Algorithmen entsprechen prinzipiell denen in 1.2, 1.3, 1.4 und 2.1.

## Patentansprüche

1. Synchronisationsverfahren für Mobilfunktelefone in einem zellularen, digitalen Mobilfunktelefonnetz, das mehrere Feststationen und Mobilfunktelefone umfaßt und nach dem GSM-Verfahren arbeitet, dadurch gekennzeichnet,
daß in dem Mobilfunktelefon eine
(1) Anfangssynchronisation, die der Verbindungsaufnahme zwischen einem Mobilfunktelefon und einer Feststation dient,
(2) Normalbetrieb-Synchronisation,
(3) Aufsynchronisation, das heißt Synchronisation eines Mobilfunktelefons auf eine Nachbarzelle während des Normalbetriebs, in einer Weise stattfindet,
bei der die Anfangssynchronisation in folgende Schritte aufgeteilt ist:
(1.1) Frequenz-Grobsynchronisation zumindest bei nicht ausreichender Genauigkeit der Trägerfrequenzen, wobei die Frequenz-Grobsynchronisation burstunabhängig arbeitet und ermittelt, ob die Frequenz des ermittelten Trägers innerhalb eines Toleranzbereiches liegt,
(1.2) Rahmen-Grobsynchronisation durch näherungsweise Detektion des Rahmenbeginns mit Hilfe der Erkennung des Beginns eines Frequency-Correction-Bursts (12)
(1.3) Frequenz-Feinsynchronisation durch Phasen-Differenzbildung zu einem Frequency-Correction-Burst (12),
(1.4) Rahmen-Feinsynchronisation,
das heißt, bit-genaue Rahmen-Synchronisation,
die Normalbetrieb-Synchronisation in folgende Schritte aufgeteilt ist:
(2.1) Rahmensynchronisation mit Frequenz-Feinsynchronisation,
(2.2) frequenzkorrigierende Datensignalvorverarbeitung mit einem Frequenz-Korrekturwert, der aus aktuellen Frequenzmessungen ermittelt wird,
und die Aufsynchronisation aus einer
(3.1) Rahmen-Grobsynchronisation,
(3.2) Rahmen-Feinsynchronisation mit Frequenz-Feinsynchronisation besteht.

2. Synchronisationsverfahren nach Anspruch 1, dadurch gekennzeichnet, daß die Synchronisierung auf der Auswertung der kontinuierlichen Phasenwinkel beruht, die jeweils aus den einzelnen I-, Q-Wertepaaren berechnet werden.

3. Synchronisationsverfahren nach Anspruch 1 oder 2, dadurch gekennzeichnet, daß die Genauigkeit der Frequenz-Grobsynchronisation durch den Phasentoleranzbereich (Tb) variierbar ist.

4. Synchronisationsverfahren nach einem der Ansprüche 1 bis 3, dadurch gekennzeichnet, daß der maximale Phasentoleranzbereich durch einen der Binärfolge 0000... oberer Phasenendwert und der Binärfolge 0101... unterer Phasenendwert entsprechenden Phasenwinkel gegeben ist.

5. Synchronisationsverfahren nach einem der Ansprüche 1 bis 4, dadurch gekennzeichnet, daß die Rahmen-Grobsynchronisation durch Auswertung der Frequency-Correction-Bursts (12) erfolgt.

6. Synchronisationsverfahren nach einem der Ansprüche 1 bis 5, dadurch gekennzeichnet, daß zur Frequenz-Feinsynchronisation der Frequency-Correction-Burst (12) derart ausgewertet wird, daß aus den Phasendifferenzwerten benachbarter Phasenwerte über eine lineare Regression eine dem Frequenzversatz proportionale Regelgröße gebildet wird.

7. Synchronisationsverfahren nach einem der Ansprüche 1 bis 6, dadurch gekennzeichnet, daß die Rahmen-Feinsynchronisation über die Erkennung und Auswertung der Extended-Training-Sequence des Synchronisations-Bursts (13) erfolgt.

8. Synchronisationsverfahren nach Anspruch 7, dadurch gekennzeichnet, daß das Erkennen der Extended-Training-Sequence durch ein Musterkorrelationsverfahren erfolgt.

9. Synchronisationsverfahren nach einem der Ansprüche 1 bis 6, dadurch gekennzeichnet, daß die Normalbetriebs-Synchronisation über die Erkennung und Auswertung der Training-Sequence innerhalb des Normal-Bursts (14) erfolgt.

10. Synchronisationsverfahren nach einem der Ansprüche 1 bis 9, dadurch gekennzeichnet, daß die Rahmen-Synchronisation durch ein Musterkorrelationsverfahren und die Frequenz-Synchronisation durch eine Auswertung des Frequency-Correction-Bursts derart erfolgt, daß aus den Phasendifferenzwerten benachbarter Phasenwerte über eine lineare Regression eine dem Frequenzversatz proportionale Regelgröße für die zentrale Steuereinheit (31) gebildet wird.

11. Synchronisationsverfahren nach einem der Ansprüche 1 bis 10, dadurch gekennzeichnet, daß die Aufsynchronisastion auf umgebende Nachbarzellen während des Normalbetriebes durch eine Rahmen-Grobsynchronisation erfolgt und daß danach eine Rahmen-Feinsynchronisation mit Frequenz-Feinsynchronisation durch Erkennen und Auswerten des Synchronisations-Bursts (13) stattfindet.

12. Synchronisationsverfahren nach einem der Ansprüche 1 bis 11, dadurch gekennzeichnet, daß die Aufsynchronisation mit geringerer Priorität gegenüber dem Normalbetrieb ausgeführt wird.

13. Synchronisationsverfahren nach einem der Ansprüche 1 bis 12, dadurch gekennzeichnet, daß eine Signal-Vorverarbeitung der I-, Q-Abtastwerte vorgenommen wird, um die Eliminierung eines Frequenz-Offsets zu erreichen.

## Claims

1. Synchronization method for mobile radio telephones in a cellular, digital mobile radio telephone network, which comprises a plurality of fixed stations and mobile radio telephones and operates with the GSM method, characterized
in that, in the mobile radio telephone,
(1) initial synchronization which is used to set up a connection between a mobile radio telephone and a fixed station,
(2) normal operation synchronization, and
(3) lock-on synchronization, that is to say synchronization of a mobile radio telephone to an adjacent cell during normal operation, are carried out in a manner
in which the initial synchronization is split into the following steps:
(1.1) coarse frequency synchronization at least if the accuracy of the carrier frequencies is not adequate, in which case the coarse frequency synchronization operates independently of bursts and determines whether the frequency of the determined carrier is within a tolerance band,
(1.2) coarse frame synchronization by approximate detection of the start of a frame with the aid of the identification of the start of a frequency correction burst (12),
(1.3) fine frequency synchronization by phase differencing with regard to a frequency correction burst (12),
(1.4) fine frame synchronization, that is to say bit-accuracy frame synchronization,
the normal operation synchronization is split into the following steps:
(2.1) frame synchronization with fine frequency synchronization,
(2.2) frequency-correcting data signal preprocessing using a frequency correction value which is determined from up-to-date frequency measurements,
and the lock-on synchronization comprises
(3.1) coarse frame synchronization, and
(3.2) fine frame synchronization with fine frequency synchronization.

2. Synchronization method according to Claim 1, characterized in that the synchronization is based on the evaluation of the continuous phase angles, which are in each case calculated from the individual I, Q value pairs.

3. Synchronization method according to Claim 1 or 2, characterized in that the accuracy of the coarse frequency synchronization can be varied by the phase tolerance band (Tb).

4. Synchronization method according to one of Claims 1 to 3, characterized in that the maximum phase tolerance band is given by a phase angle which corresponds to the binary sequence 0000... upper phase end value and the binary sequence 0101... lower phase end value.

5. Synchronization method according to one of Claims 1 to 4, characterized in that the coarse frame synchronization is carried out by evaluating the frequency correction bursts (12).

6. Synchronization method according to one of Claims 1 to 5, characterized in that the frequency correction burst (12) is evaluated for the purpose of fine frequency synchronization in such a manner that a control variable, which is proportional to the frequency offset, is formed from the phase difference values of adjacent phase values, using linear regression.

7. Synchronization method according to one of Claims 1 to 6, characterized in that the fine frame synchronization is carried out by identifying and evaluating the extended training sequence of the synchronization burst (13).

8. Synchronization method according to Claim 7, characterized in that the extended training sequence is identified by means of a pattern correlation method.

9. Synchronization method according to one of Claims 1 to 6, characterized in that the normal operation synchronization is carried out by identifying and evaluating the training sequence within the normal burst (14).

10. Synchronization method according to one of Claims 1 to 9, characterized in that the frame synchronization is carried out by means of a pattern correlation method, and the frequency synchronization is carried out by evaluating the frequency correction burst, in such a manner that a control variable which is proportional to the frequency offset is formed for the central control unit (31) from the phase difference values of adjacent phase values, using linear regression.

11. Synchronization method according to one of Claims 1 to 10, characterized in that the lock-on synchronization is carried out to surrounding adjacent cells during normal operation by means of coarse frame synchronization and in that, after this, fine frame synchronization is carried out with fine frequency synchronization by identifying and evaluating the synchronization burst (13).

12. Synchronization method according to one of Claims 1 to 11, characterized in that the lock-on synchronization is carried out with a lower priority than normal operation.

13. Synchronization method according to one of Claims 1 to 12, characterized in that signal preprocessing of the I, Q sample values is carried out in order to achieve the elimination of a frequency offset.

## Revendications

1. Procédé de synchronisation de radio mobile d'un réseau de téléphone mobile numérique cellulaire comportant plusieurs stations fixes et des téléphones mobiles et travaillant selon le procédé GSM, caractérisé en ce que
dans le téléphone mobile on effectue
(1) une synchronisation initiale servant à établir la liaison entre un téléphone mobile et une station fixe,
(2) une synchronisation de fonctionnement normal,
(3) une synchronisation forcée, c'est-à-dire la synchronisation d'un téléphone mobile sur une cellule voisine pendant le fonctionnement normal,
la synchronisation initiale étant subdivisée dans les étapes suivantes :
(1.1) synchronisation grossière de la fréquence au moins pour une précision non suffisante des fréquences porteuses, la synchronisation grossière de la fréquence travaillant indépendamment de la salve et déterminant si la fréquence de la porteuse obtenue se situe à l'intérieur d'une plage de fréquences,
(1.2) synchronisation grossière de trame par détection approximative du début de trame à l'aide de la reconnaissance du début d'une salve de corrections de fréquence 12,
(1.3) synchronisation fine de la fréquence par formation de la différence de phase pour une salve de correction de fréquence 12,
(1.4) synchronisation fine de trame, c'est-à-dire synchronisation de trame précise ou bit,
la synchronisation normale étant divisée dans les étapes suivantes :
(2.1) synchronisation de trame avec synchronisation fine de fréquence,
(2.2) traitement préalable du signal de données corrigeant la fréquence avec une valeur de correction de fréquence obtenue à partir de la mesure actuelle de la fréquence actuelle,
et synchronisation forcée comprenant :
(3.1) une synchronisation grossière de trame,
(3.2) une synchronisation fine de trame avec synchronisation fine de fréquence.

2. Procédé de synchronisation selon la revendication 1,
caractérisé en ce que
la synchronisation repose sur l'exploitation de l'angle de phases continu calculé à partir des paires de valeurs I, Q respectives.

3. Procédé de synchronisation selon la revendication 1 ou 2,
caractérisé en ce qu'
on varie la précision de la synchronisation grossière de fréquence par la plage de tolérances de phases (Tb).

4. Procédé de synchronisation selon l'une quelconque des revendications 1 à 3,
caractérisé en ce qu'
on définit la plage maximale des tolérances de phases par un angle de phases correspondant à la suite binaire 0000... (valeur maximale de phase) et la suite binaire 0101... (valeur minimale de phase).

5. Procédé de synchronisation selon l'une quelconque des revendications 1 à 4,
caractérisé en ce qu'
on effectue la synchronisation grossière de trame par l'exploitation de la salve de corrections de fréquence (12).

6. Procédé de synchronisation selon l'une quelconque des revendications 1 à 5,
caractérisé en ce qu'
on exploite la salve de corrections de fréquence (12) pour la synchronisation fine de fréquence et à partir des différences de phases de valeurs de phases voisines, on forme une grandeur de réglage proportionnelle au décalage de fréquence par une régression linéaire.

7. Procédé de synchronisation selon l'une quelconque des revendications 1 à 6,
caractérisé en ce qu'
on effectue une synchronisation fine de trame par la détection et l'exploitation de la séquence d'entraînement étendue de la salve de synchronisations (13).

8. Procédé de synchronisation selon la revendication 7,
caractérisé en ce qu'
on détecte la séquence d'entraînement étendue par un procédé de corrélation modèle.

9. Procédé de synchronisation selon l'une quelconque des revendications 1 à 6,
caractérisé en ce qu'
on effectue la synchronisation en fonctionnement normal par la détection et l'exploitation de la séquence d'entraînement à l'intérieur de la salve normale (14).

10. Procédé de synchronisation selon l'une quelconque des revendications 1 à 9,
caractérisé en ce qu'
on effectue la synchronisation de trame par un procédé de corrélation modèle et la synchronisation de fréquence par une exploitation de la salve de corrections de fréquence et à partir des valeurs des différences de phases voisines par une régression linéaire on forme une grandeur de régulation proportionnelle au décalage de fréquence pour l'unité de commande centrale (31).

11. Procédé de synchronisation selon l'une quelconque des revendications 1 à 10,
caractérisé en ce qu'
• on effectue la synchronisation forcée sur des cellules voisines environnantes pendant le fonctionnement normal par une synchronisation grossière de trame puis,
• on effectue une synchronisation fine de trame avec une synchronisation fine de fréquence par détection et exploitation de la salve de synchronisation (13).

12. Procédé de synchronisation selon l'une quelconque des revendications 1 à 11,
caractérisé en ce qu'
on effectue la synchronisation forcée avec une priorité plus faible que celle du fonctionnement normal.

13. Procédé de synchronisation selon l'une quelconque des revendications 1 à 12,
caractérisé en ce qu'
on effectue une préparation de signal pour les valeurs de détection I, Q pour éliminer le décalage de fréquence.
